# EUROPEAN PATENT APPLICATION

(11) **EP 4 510 350 A1**
(43) Date of publication of application: **19.02.2025**
(21) Application number: 22964766.4
(22) Date of filing: 09.11.2022
(51) Int. Cl.: H01M 50/342, H01M 50/30

(54) **PRESSURE RELEASE APPARATUS, BATTERY CELL, BATTERY, ELECTRICAL DEVICE AND MANUFACTURING METHOD**

(71) Applicant: Contemporary Amperex Technology Co., Limited, Ningde, Fujian 352100 (CN)
(72) Inventor: ZHOU, Wenlin, Ningde, Fujian 352100 (CN); LI, Quankun, Ningde, Fujian 352100 (CN); WANG, Peng, Ningde, Fujian 352100 (CN)
(74) Representative: Ran, Handong
(86) International application number: PCT/CN2022/130919
(87) International publication number: WO 2024/098292

(57) **Abstract**

The present application relates to the field of batteries, and provides a pressure release apparatus, a battery cell, a battery, an electrical device, and a manufacturing method. The pressure release apparatus comprises a pressure release portion, a weak portion and a solder pad portion, the weak portion being disposed on the pressure release portion, and the weak portion being configured to crack when the pressure of the battery cell is released. The solder pad portion is disposed on the pressure release portion, the welding printing portion being configured to anneal the weak portion when the welding printing portion is formed. The solder pad portion is disposed on the pressure release portion of the pressure release device, and the solder pad portion requires high-temperature ablation during a forming process, the high temperature acting on the weak portion and achieving an annealing effect on the weak portion. While keeping detonation pressure consistent, a weak portion of a pressure release apparatus provided with a solder pad portion can be thicker than a weak portion of a pressure release apparatus without a solder pad portion; increasing the thickness of the weak portion can improve resistance to external impact, and reduce the risk of opening the valve prematurely.

## Description

### TECHNICAL FIELD

The present application relates to the technical field of batteries, and specifically, to a pressure relief device, a battery cell, a battery, an electrical apparatus, and a manufacturing method.

### BACKGROUND

Batteries are widely used in the field of new energy, such as electric vehicles and new energy vehicles. New energy vehicles and electric vehicles have become a new development trend in the vehicle industry. An end cover of a battery is provided with a pressure relief structure for relieving the internal pressure when the internal pressure of the battery reaches a detonation pressure. However, when a battery cell is impacted, the pressure relief structure is often opened in advance, causing the normal pressure relief function to fail.

### SUMMARY OF THE INVENTION

An objective of embodiments of the present application is to provide a pressure relief device, a battery cell, a battery, an electrical apparatus and a manufacturing method, which are intended to improve the problem in the related art of the pressure relief structure being often opened in advance, causing the normal pressure relief function to fail.

In a first aspect, an embodiment of the present application provides a pressure relief device for a battery cell. The pressure relief device includes a pressure relief portion, a weak portion and a weld mark portion. The weak portion is arranged at the pressure relief portion and configured to crack when pressure is relieved from the battery cell; and the weld mark portion is arranged at the pressure relief portion and configured to anneal the weak portion when the weld mark portion is formed.

In the above technical solution, the weld mark portion is arranged on the pressure relief portion of the pressure relief device. It is necessary to ablate the weld mark portion at a high temperature during formation. The high temperature acts on the weak portion and functions to anneal the weak portion (refining material grains of the weak portion, releasing the internal stress of the material of the weak portion, and softening the weak portion at the same time). In this way, under the condition of consistent detonation pressure, the weak portion of the pressure relief device provided with the weld mark portion can be thicker than a weak portion of a pressure relief device provided with no weld mark portion. The increased thickness of the weak portion can improve the resistance to external impact to reduce the risk of opening a valve in advance. In addition, if the thickness of the weak portion is larger, the thickness that needs to be thinned by machining is smaller, so that the difficulty of machining can be reduced.

As an optional technical solution of the embodiment of the present application, in a direction perpendicular to a thickness direction of the pressure relief portion, a spacing between the weld mark portion and the weak portion is defined as A, satisfying: 0.5 mm ≤ A ≤ 10 mm.

In the above technical solution, the spacing between the weld mark portion and the weak portion in the direction perpendicular to the thickness direction of the pressure relief portion is limited to 0.5-10 mm, so that during the formation of the weld mark portion, the weak portion is less likely to be damaged while providing a good annealing effect on the weak portion. The spacing A cannot be too small. For example, if the spacing A < 0.5 mm, the weak portion is likely to be damaged during the formation of the weld mark portion. The spacing A also cannot be too large. For example, if the spacing A > 10 mm, the weld mark portion is too far away from the weak portion, the weak portion cannot be annealed during the formation of the weld mark portion.

As an optional technical solution of the embodiment of the present application, 0.8 mm ≤ A ≤ 3 mm is further satisfied.

In the above technical solution, in the direction perpendicular to the thickness direction of the pressure relief portion, the spacing between the weld mark portion and the weak portion is limited to the range of 0.8-3 mm, so that a good annealing effect on the weak portion can be ensured while the weak portion is less likely to be damaged.

As an optional technical solution of the embodiment of the present application, the weld mark portion is arranged around the weak portion.

In the above technical solution, the weld mark portion is arranged around the weak portion, and is located outside the weak portion. In this way, during the formation of the weld mark portion, the high temperature can act on the entire periphery of the weak portion, achieving a better annealing effect, so that when the internal pressure of the battery cell reaches the detonation pressure, the weak portion can quickly crack, achieving rapid pressure relief.

As an optional technical solution of the embodiment of the present application, the weak portion is arranged around the weld mark portion.

In the above technical solution, the weak portion is arranged around the weld mark portion, and the weld mark portion is located inside the weak portion. In this way, during the formation of the weld mark portion, the high temperature can also act on the entire periphery of the weak portion, achieving a better annealing effect, so that when the internal pressure of the battery cell reaches the detonation pressure, the weak portion can quickly crack, achieving rapid pressure relief.

As an optional technical solution of the embodiment of the present application, the pressure relief device includes two weld mark portions, wherein the weak portion is located between the two weld mark portions in a first direction which is perpendicular to the thickness direction of the pressure relief portion.

In the above technical solution, by arranging the weak portion between the two weld mark portions in the first direction, during the formation of the two weld mark portions, the high temperature can fully act on the weak portion, achieving a better annealing effect, so that when the internal pressure of the battery cell reaches the detonation pressure, the weak portion can quickly crack, achieving rapid pressure relief.

As an optional technical solution of the embodiment of the present application, the weak portion is a closed structure extending along a closed trajectory.

In the above technical solution, the weak portion is configured as a closed structure extending along a closed trajectory, so that when the internal pressure of the battery cell reaches the detonation pressure, the internal pressure can push open the weak portion from all sides, allowing for faster and easier pressure relief.

As an optional technical solution of the embodiment of the present application, the weld mark portion is a closed structure extending along a closed trajectory.

In the above technical solution, by configuring the weld mark portion as a closed structure extending along a closed trajectory, the weld mark portion can surround the weak portion. In this way, during the formation of the weld mark portion, the high temperature can fully act on the weak portion, achieving a better annealing effect.

As an optional technical solution of the embodiment of the present application, the weld mark portion includes a plurality of weld mark sections which are arranged at intervals in a peripheral direction of the weak portion.

In the above technical solution, by providing a plurality of weld mark sections at intervals in the peripheral direction of the weak portion, energy consumption is lower and production costs can be saved compared to providing the weld mark portion along the entire periphery of the weak portion in the peripheral direction.

As an optional technical solution of the embodiment of the present application, the pressure relief portion is provided with an indented groove, and the pressure relief device forms the weak portion at the position of the indented groove.

In the above technical solution, an indented groove is provided on the pressure relief portion to form the weak portion, which is simple and convenient, is easy to machine, and has low production costs.

As an optional technical solution of the embodiment of the present application, the indented groove and the weld mark portion are located on two sides of the pressure relief portion in the thickness direction of the pressure relief portion.

In the above technical solution, even if the indented groove and the weld mark portion are located on the two sides of the pressure relief portion in the thickness direction, during the formation of the weld mark portion, the high temperature can be transferred to the location of the weak portion, to anneal the weak portion.

As an optional technical solution of the embodiment of the present application, the indented groove and the weld mark portion are located on the same side of the pressure relief portion in the thickness direction of the pressure relief portion.

In the above technical solution, the indented groove and the weld mark portion are located on the same side of the pressure relief portion in the thickness direction, so that during the formation of the weld mark portion, the high temperature is easily transferred to the location of the weak portion, to anneal the weak portion.

As an optional technical solution of the embodiment of the present application, the pressure relief device includes two weld mark portions, wherein the two weld mark portions are located on two sides of the pressure relief portion in the thickness direction of the pressure relief portion.

In the above technical solution, during the formation of each of the two weld mark portions, the high temperature can be transferred to the location of the weak portion, to anneal the weak portion.

In a second aspect, an embodiment of the present application also provides a battery cell, including a pressure relief device as described above.

In a third aspect, an embodiment of the present application also provides a battery, including a battery cell as described above.

In a fourth aspect, an embodiment of the present application also provides an electrical apparatus, including a battery as described above, the battery being configured to supply electric energy.

In a fifth aspect, an embodiment of the present application also provides a method for manufacturing a pressure relief device for a battery cell, the method for manufacturing a pressure relief device including: providing a pressure relief portion, the pressure relief portion having a weak portion configured to crack when pressure is relieved from the battery cell; and annealing the weak portion.

As an optional technical solution of the embodiment of the present application, in the step of annealing the weak portion, the pressure relief portion is laser welded to anneal the weak portion.

In the above technical solution, through the laser ablation of the pressure relief portion, the high temperature generated by the laser ablation will act on the weak portion and have an annealing effect on the weak portion (refining material grains of the weak portion, releasing the internal stress of the material of the weak portion, and softening the weak portion at the same time). In this way, under the condition of consistent detonation pressure, the weak portion of the pressure relief device provided with the weld mark portion can be thicker than a weak portion of a pressure relief device provided with no weld mark portion. The increased thickness of the weak portion can improve the resistance to external impact to reduce the risk of opening a valve in advance. In addition, if the thickness of the weak portion is larger, the thickness that needs to be thinned by machining is smaller, so that the difficulty of machining can be reduced.

As an optional technical solution of the embodiment of the present application, after the pressure relief portion is laser welded, a weld mark portion can be formed on the pressure relief portion, and in a direction perpendicular to a thickness direction of the pressure relief portion, a spacing between the weld mark portion and the weak portion is defined as A, satisfying: 0.5 mm ≤ A ≤ 10 mm.

In the above technical solution, the spacing between the weld mark portion and the weak portion in the direction perpendicular to the thickness direction of the pressure relief portion is limited to 0.5-10 mm, so that during the laser welding, the weak portion is less likely to be damaged while providing a good annealing effect on the weak portion. The spacing A cannot be too small. For example, if the spacing A < 0.5 mm, the weak portion is likely to be damaged during the laser welding. The spacing A also cannot be too large. For example, if the spacing A > 10 mm, the weld mark portion is too far away from the weak portion, the weak portion cannot be annealed during the laser welding.

### DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
Fig. 1 is a schematic structural diagram of a vehicle according to some embodiments of the present application;
Fig. 2 is an exploded view of a battery according to some embodiments of the present application;
Fig. 3 is an exploded view of a battery cell according to some embodiments of the present application;
Fig. 4 is a schematic structural diagram of a pressure relief device according to some embodiments of the present application;
Fig. 5 is a schematic top view of a pressure relief device (with a weld mark portion arranged around a weak portion) according to some embodiments of the present application;
Fig. 6 is a cross-sectional view along B-B in Fig. 5;
Fig. 7 is a schematic top view of a pressure relief device (with a weak portion arranged around a weld mark portion) according to some embodiments of the present application;
Fig. 8 is a sectional view taken through C-C of Fig. 7;
Fig. 9 is a schematic top view of a pressure relief device (with a weak portion located between two weld mark portions) according to some embodiments of the present application;
Fig. 10 is a cross-sectional view along D-D in Fig. 9;
Fig. 11 is a schematic top view of a pressure relief device (with a weak portion being a non-closed structure extending along a non-closed trajectory with a distance between two ends) according to some embodiments of the present application;
Fig. 12 is a schematic top view of a pressure relief device (with a plurality of weld mark sections arranged at intervals in a peripheral direction of a weak portion) according to some embodiments of the present application;
Fig. 13 is a schematic top view of a pressure relief device according to some other embodiments of the present application;
Fig. 14 is a cross-sectional view along E-E in Fig. 13;
Fig. 15 is a schematic top view of a pressure relief device (with an indented groove and a weld mark portion located on two sides of a pressure relief portion) according to some embodiments of the present application;
Fig. 16 is a cross-sectional view along F-F in Fig. 15;
Fig. 17 is a schematic top view of a pressure relief device (with two weld mark portions located on two sides of a pressure relief portion) according to some embodiments of the present application;
Fig. 18 is a cross-sectional view along G-G in Fig. 17; and
Fig. 19 is a schematic block diagram of a method for manufacturing a pressure relief device according to some embodiments of the present application.

List of reference signs: 10 - box; 11 - first part; 12 - second part; 20 - battery cell; 21 - end cover; 22 - electrode assembly; 23 - housing; 24 - pressure relief device; 241 - weak portion; 242 - weld mark portion; 2421 - weld mark section; 243 - indented groove; 244 - pressure relief portion; 30 - method for manufacturing a pressure relief device; 100 - battery; 200 - controller; 300 - motor; 1000 - vehicle.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions. The terms "first", "second" and the like in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated device, are for illustrative purposes only, and should not constitute any limitation to the present application.

In the present application, the phrase "a plurality of" means two or more.

In the present application, the battery cell may include a lithium-ion secondary battery, a lithium-ion primary battery, a lithium sulfur battery, a sodium lithium-ion battery, a sodium-ion battery or a magnesium-ion battery and so on. This is not limited in the embodiments of the present application. The battery cell may be in a cylindrical shape, a flat shape, a cuboid shape or another shape, which is also not limited in the embodiments of the present application. The battery cells are generally classified into three types depending on the way of package: cylindrical battery cells, prismatic battery cells and pouch battery cells, which are also not limited in the embodiments of the present application.

The battery mentioned in the embodiments of the present application refers to a single physical module including one or more battery cells to provide a higher voltage and capacity. For example, the battery mentioned in the present application may include a battery module or a battery pack, etc. The battery generally includes a box for packaging one or more battery cells. The box can prevent liquid or other foreign matters from affecting charging or discharging of the battery cells.

The battery cell includes an electrode assembly and an electrolytic solution, and the electrode assembly is composed of a positive electrode plate, a negative electrode plate and an separator. The operation of the battery cell mainly relies on the movement of metal ions between the positive electrode plate and the negative electrode plate. The positive electrode plate includes a positive electrode current collector and a positive electrode active material layer, a surface of the positive electrode current collector is coated with the positive electrode active material layer, the positive electrode current collector not coated with the positive electrode active material layer protrudes from the positive electrode current collector already coated with the positive electrode active material layer, and the positive electrode current collector not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer, a surface of the negative electrode current collector is coated with the negative electrode active material layer, the negative electrode current collector not coated with the negative electrode active material layer protrudes from the negative electrode current collector already coated with the negative electrode active material layer, and the negative electrode current collector not coated with the negative electrode active material layer is used as a negative tab. The negative electrode current collector may be of a material of copper, and the negative electrode active material may be carbon, silicon, etc. In order to ensure that no fusing occurs when a large current passes, there are a plurality of positive tabs which are stacked together, and there are a plurality of negative tabs which are stacked together. The separator may be of a material such as polypropylene (PP) or polyethylene (PE). In addition, the electrode assembly may have a wound structure or a stacked structure, but the embodiments of the present application are not limited thereto.

At present, from the development of market situation, the application of batteries is becoming more and more extensive. Batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of the batteries, the market demand is also constantly expanding.

With the development of the battery technology, it is necessary to consider many design factors, such as energy density, cycle life, discharge capacity, C-rate and other performance parameters. In addition, the safety of the battery should also be considered.

For a battery cell, in order to ensure the safety of the battery cell, an end cover of the battery cell may be provided with a pressure relief structure. For example, the end cover is provided with a weak portion. When the internal pressure of the battery cell reaches the detonation pressure, the weak portion is opened to relieve the pressure from the inside of the battery cell to reduce the risk of explosion or fire of the battery cell.

The inventors have noticed that when a battery cell is impacted, the pressure relief structure is often opened in advance, causing the normal pressure relief function to fail.

The inventors have further studied and found that when the battery cell is impacted, the external impact force is easily transferred to the location of the pressure relief structure, so that the pressure relief structure to be opened in advance, causing the normal pressure relief function to fail.

In view of this, an embodiment of the present application provides a pressure relief device, which includes a pressure relief portion, a weak portion, and a weld mark portion. The weak portion is arranged at the pressure relief portion and configured to crack when pressure is relieved from the battery cell. The weld mark portion is arranged at the pressure relief portion and configured to anneal the weak portion when the weld mark portion is formed.

The weld mark portion is arranged on the pressure relief portion of the pressure relief device. It is necessary to ablate the weld mark portion at a high temperature during formation. The high temperature acts on the weak portion and functions to anneal the weak portion (refining material grains of the weak portion, releasing the internal stress of the material of the weak portion, and softening the weak portion at the same time). In this way, under the condition of consistent detonation pressure, the weak portion of the pressure relief device provided with the weld mark portion can be thicker than a weak portion of a pressure relief device provided with no weld mark portion. The increased thickness of the weak portion can improve the resistance to external impact to reduce the risk of opening a valve in advance.

In addition, if the thickness of the weak portion is larger, the thickness that needs to be thinned by machining is smaller, so that the difficulty of machining can be reduced.

The technical solutions described in the embodiments of the present application are applicable to batteries and electrical apparatuses using the batteries.

The electrical apparatus may be a vehicle, a mobile phone, a portable apparatus, a laptop, a ship, a spacecraft, an electric toy, an electric tool, etc. The spacecraft includes an airplane, a rocket, a space shuttle, or a spaceship. The electric toy includes a fixed or mobile electric toy, such as a game console, an electric vehicle toy, an electric ship toy, and an electric airplane toy. The electric tool includes an electric tool for metal cutting, an electric tool for grinding, an electric tool for assembling and an electric tool for railways, such as an electric drill, an electric grinder, an electric wrench, an electric screwdriver, an electric hammer, an electric impact drill, a concrete vibrator, and an electric planer. The electrical apparatus is not specially limited in the embodiments of the present application.

In the following embodiments, for convenience of description, the electrical apparatus being a vehicle 1000 is taken as an example for illustration.

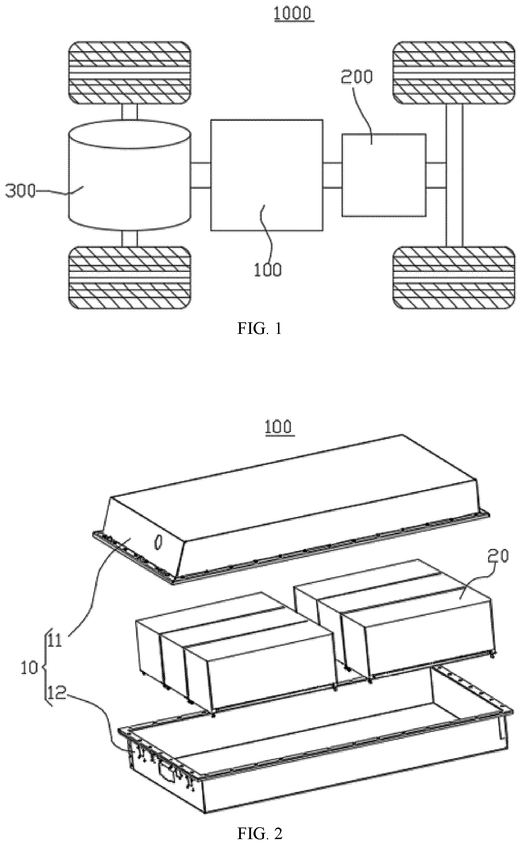

Referring to Fig. 1, Fig. 1 is a schematic structural diagram of a vehicle 1000 according to some embodiments of the present application. The vehicle 1000 may be a fuel vehicle, a gas vehicle or a new energy vehicle. The new energy vehicle may be an all-electric vehicle, a hybrid vehicle, an extended-range vehicle, etc. A battery 100 is provided in the vehicle 1000. The battery 100 may be arranged at the bottom or head or tail of the vehicle 1000. The battery 100 may be configured to supply power to the vehicle 1000. For example, the battery 100 may be used as an operation power supply of the vehicle 1000. The vehicle 1000 may further include a controller 200 and a motor 300. The controller 200 is configured to control the battery 100 to power the motor 300. For example, the controller is used for meeting the operating power demand when the vehicle 1000 is starting, navigating and driving.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

Referring to Fig. 2, Fig. 2 is an exploded view of a battery 100 according to some embodiments of the present application. The battery 100 includes a box 10 and a battery cell 20. The battery cell 20 is accommodated in the box 10. The box 10 is used to provide an accommodating space for the battery cell 20, and the box 10 may be of various structures. In some embodiments, the box 10 may include a first part 11 and a second part 12. The first part 11 and the second part 12 are covered by each other, and the first part 11 and the second part 12 together define the accommodating space for accommodating the battery cell 20. The second part 12 may be a hollow structure with one end open, the first part 11 may be a plate-like structure, and the first part 11 covers the opening side of the second part 12, so that the first part 11 and the second part 12 together define the accommodating space. It is also possible that each of the first part 11 and the second part 12 is a hollow structure with one side open, and the opening side of the first part 11 covers the opening side of the second part 12. Of course, the box 10 formed by the first part 11 and the second part 12 can be of various shapes, such as a cylinder or a cuboid.

In the battery 100, there may be a plurality of battery cells 20, and the plurality of battery cells 20 may be connected in series or parallel or series-parallel connection, wherein the series-parallel connection means that the plurality of battery cells 20 are connected in both series and parallel. A plurality of battery cells 20 may be directly connected in series or in parallel or in series-parallel, and then an entirety composed of the plurality of battery cells 20 may be accommodated in the box 10. Of course, the battery 100 may alternatively consist in that a plurality of battery cells 20 are first connected in series, in parallel or in series-parallel to form a plurality of battery modules, and the plurality of battery modules are then connected in series or in parallel or in series-parallel to form a whole, and are accommodated in the box 10. The battery 100 may further include other structures. For example, the battery 100 may further include a bus component for electrically connecting the plurality of battery cells 20.

Each battery cell 20 may be a secondary battery cell or a primary battery cell; or may be a lithium-sulfur battery cell, a sodium-ion battery cell or a magnesium-ion battery cell, but is not limited thereto. The battery cell 20 may be in the shape of a cylinder, a flat body, a cuboid or others.

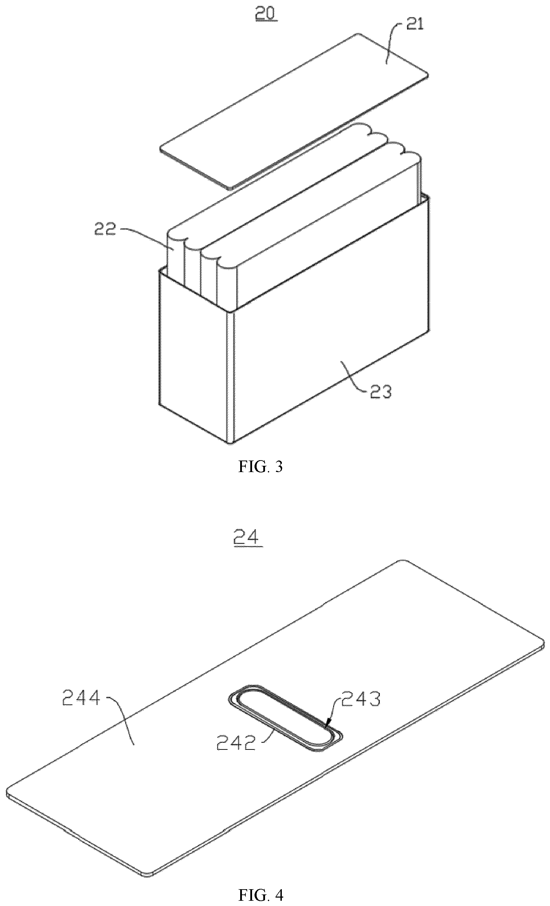

Referring to Fig. 3, Fig. 3 is an exploded view of a battery cell 20 according to some embodiments of the present application. The battery cell 20 is the smallest unit constituting the battery 100. As shown in Fig. 3, the battery cell 20 includes an end cover 21, an electrode assembly 22, a housing 23, a pressure relief device 24 (not shown in Fig. 3) and other functional components.

The end cover 21 is a component that covers the opening of the housing 23 to isolate the internal environment of the battery cell 20 from the external environment. Without limitation, the shape of the end cover 21 may be adapted to the shape of the housing 23 to match the housing 23. Optionally, the end cover 21 may be made of a material (such as an aluminum alloy) with a certain hardness and strength, so that the end cover 21 is not easy to be deformed when being pressed and collided, the battery cell 20 can have a higher structural strength, and the safety performance can also be improved. The end cover 21 may be provided with functional components such as electrode terminals (not shown). The electrode terminals may be used for electrical connection with the electrode assembly 22 for outputting or inputting electric energy of the battery cell 20. The end cover 21 may be made of various materials, such as copper, iron, aluminum, stainless steel, an aluminum alloy, and plastic. This is not specially limited in the embodiments of the present application. In some embodiments, an insulating member may be also provided on the inner side of the end cover 21. The insulating member may be configured to isolate an electrical connection component in the housing 23 from the end cover 21 to reduce the risk of short circuit. As an example, the insulating member may be made of plastic, rubber or the like.

The housing 23 is an assembly for matching the end cover 21 to form the internal environment of the battery cell 20. The formed internal environment may be used to accommodate the electrode assembly 22, an electrolytic solution and other components. The housing 23 and the end cover 21 may be separate components, the housing 23 may be provided with an opening, and the internal environment of the battery cell 20 is formed by making the end cover 21 cover the opening at the opening. Without limitation, the end cover 21 and the housing 23 may also be integrated with each other. Specifically, the end cover 21 and the housing 23 may form a common connection face before other components are inserted into the housing. When the interior of the housing 23 needs to be packaged, the end cover 21 then covers the housing 23. The housing 23 may have various shapes and sizes, such as a cuboid, a cylinder and a hexagonal prism. Specifically, the housing 23 may be shaped according to the specific shape and size of the electrode assembly 22. The housing 23 may be made of various materials, such as copper, iron, aluminum, stainless steel, an aluminum alloy, and plastic. This is not specially limited in the embodiments of the present application.

The electrode assembly 22 is a component of a battery cell 20 where an electrochemical reaction occurs. One or more electrode assemblies 22 may be contained in the housing 23. The electrode assembly 22 is mainly formed by winding or stacking a positive electrode plate and a negative electrode plate, and a separator is generally provided between the positive electrode plate and the negative electrode plate. The parts of the positive electrode plate and the negative electrode plate having active materials constitute a main body portion of the electrode assembly 22, and the parts of the positive electrode plate and the negative electrode plate having no active materials respectively constitute tabs. The positive tab and the negative tab may be located at one end of the main portion together or at two ends of the main body portion respectively. During the charging or discharging process of the battery 100, the positive active material and the negative active material react with an electrolytic solution, and the tabs are connected to the electrode terminals to form a current loop.

The pressure relief device 24 is a component that relieves the pressure from the inside of the battery cell 20. When the pressure inside the battery cell 20 reaches the detonation pressure, the pressure relief device 24 relieves the pressure from the inside of the battery cell 20. The pressure relief device 24 may be a component provided on the end cover 21, or the housing 23 may be used as the pressure relief device 24, or the end cover 21 may be used as the pressure relief device 24. The specific structure of the pressure relief device 24 will be described in detail below with reference to the accompanying drawings.

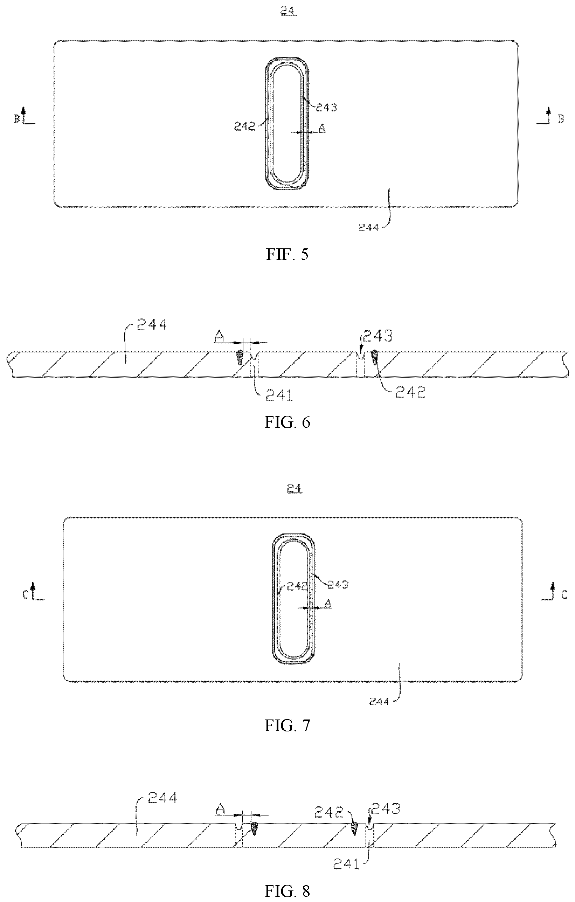

Referring to Figs. 4, 5 and 6, Fig. 4 is a schematic structural diagram of a pressure relief device 24 according to some embodiments of the present application. Fig. 5 is a schematic top view of a pressure relief device 24 (with a weld mark portion 242 arranged around a weak portion 241) according to some embodiments of the present application. Fig. 6 is a cross-sectional view along B-B in Fig. 5. An embodiment of the present application provides a pressure relief device 24 for a battery cell 20. The pressure relief device 24 includes a pressure relief portion 244, a weak portion 241 and a weld mark portion 242. The weak portion 241 is arranged at the pressure relief portion 244, and the weak portion 241 is configured to crack when pressure is relieved from the battery cell 20. The weld mark portion 242 is arranged at the pressure relief portion 244, and the weld mark portion 242 is configured to anneal the weak portion 241 when the weld mark portion is formed.

The pressure relief portion 244 may be a component mounted on the end cover 21. For example, the pressure relief portion 244 is an explosion-proof sheet mounted on the end cover 21. The pressure relief portion 244 may alternatively be integrally used as the end cover 21. The pressure relief portion 244 may be a part of the housing 23. For example, the pressure relief portion 244 may be a wall of the housing 23 or a part of a wall.

The weak portion 241 is a part of the pressure relief portion 244 that has a lower strength. When the internal pressure of the battery cell 20 reaches the detonation pressure, the weak portion 241 is opened under the pressure and relieves the pressure from the inside of the battery cell 20, to reduce the risk of explosion or fire of the battery cell 20. It should be noted that the dotted line in Fig. 6 is to identify the range of the weak portion 241 and does not represent the actual structure.

The weld mark portion 242 is a part of the pressure relief portion 244 that has a weld mark left thereon after the pressure relief portion 244 is welded. The welding method is not limited and, for example, is gas welding, electric welding, laser welding, etc.

The weld mark portion 242 is arranged on the pressure relief portion 244 of the pressure relief device 24. It is necessary to ablate the weld mark portion 242 at a high temperature during formation. The high temperature acts on the weak portion 241 and functions to anneal the weak portion 241 (refining material grains of the weak portion 241, releasing the internal stress of the material of the weak portion 241, and softening the weak portion 241 at the same time). In this way, under the condition of consistent detonation pressure, the weak portion 241 of the pressure relief device 24 provided with the weld mark portion 242 can be thicker than a weak portion 241 of a pressure relief device 24 provided with no weld mark portion 242. The increased thickness of the weak portion 241 can improve the resistance to external impact to reduce the risk of opening a valve in advance. In addition, if the thickness of the weak portion 241 is larger, the thickness that needs to be thinned by machining is smaller, so that the difficulty of machining can be reduced.

In some embodiments, in a direction perpendicular to a thickness direction of the pressure relief portion 244, a spacing between the weld mark portion 242 and the weak portion 241 is defined as A, which satisfies: 0.5 mm ≤ A ≤ 10 mm.

A represents the spacing between the weld mark portion 242 and the weak portion 241 in the direction perpendicular to the thickness direction of the pressure relief portion 244. The "spacing" refers to a distance between an edge on a side of the weld mark portion 242 close to the weak portion 241 and an edge on a side of the weak portion 241 close to the weld mark portion 242. At different positions, the value of A may be the same or different, but the minimum value of A is not less than 0.5 mm and the maximum value is not greater than 10 mm. In the direction perpendicular to the thickness direction of the pressure relief portion 244, the value of the spacing between the weld mark portion 242 and the weak portion 241 may be: A = 0.5 mm, 1 mm, 2 mm, 3 mm, 4 mm, 5 mm, 6 mm, 7 mm, 8 mm, 9 mm, 10 mm, etc.

The spacing between the weld mark portion 242 and the weak portion 241 in the direction perpendicular to the thickness direction of the pressure relief portion 244 is limited to 0.5-10 mm, so that during the formation of the weld mark portion 242, the weak portion 241 is less likely to be damaged while providing a good annealing effect on the weak portion 241.

Referring to Table 1, Table 1 is test data of the detonation pressure of the battery cell 20 with different spacings. In the table, H1 is the thickness of the weak portion 241, in mm. P1 is the detonation pressure of the battery cell 20 before the weld mark portion 242 is formed, in MPa. A is the spacing between the weld mark portion 242 and the weak portion 241 in the direction perpendicular to the thickness direction of the pressure relief portion 244, in mm. P2 is the detonation pressure of the battery cell 20 after the weld mark portion 242 is formed, in MPa. H2 is the thickness of the weak portion 241 when no weld mark portion 242 is provided and the detonation pressure reaches P2, in mm. Comments are a brief description of the test data.

**Table 1**

| H1 | P1 | A | P2 | H2 | Comments |
|---|---|---|---|---|---|
| | | 0.2 | / | / | Damage to the weak portion |
| | | 0.4 | / | / | Damage to the weak portion |
| | | 0.5 | 0.5041 | 0.0713 | |
| | | 0.6 | 0.5614 | 0.0794 | |
| | | 0.7 | 0.6713 | 0.0846 | |
| | | 0.8 | 0.7627 | 0.0931 | |
| | | 1 | 0.7741 | 0.0947 | |
| | | 1.5 | 0.8084 | 0.1046 | |
| | | 2.5 | 0.8517 | 0.1011 | |
| | | 3 | 0.8841 | 0.1169 | |
| | | 3.5 | 0.891 | 0.1207 | |
| 0.1432 | 0.9819 | 4 | 0.9123 | 0.1244 | |
| | | 4.5 | 0.9158 | 0.1276 | |
| | | 5 | 0.9241 | 0.1314 | |
| | | 6 | 0.9297 | 0.1328 | |
| | | 7 | 0.9466 | 0.1349 | |
| | | 8 | 0.9618 | 0.1386 | |
| | | 9 | 0.9751 | 0.1413 | |
| | | 10 | 0.9743 | 0.1411 | |
| | | 10.2 | 0.9819 | 0.1432 | No annealing effect |
| | | 10.5 | 0.9819 | 0.1432 | No annealing effect |
| | | 10.8 | 0.9819 | 0.1432 | No annealing effect |
| | | 11 | 0.9819 | 0.1432 | No annealing effect |
| Note: Time and power will also have a certain influence on the effect. In this experiment, the data is obtained at 800 W and 2 s | | | | | |

Referring to Table 1, it can be seen from the table that the spacing A cannot be too small. For example, if the spacing A < 0.5 mm, the weak portion 241 is likely to be damaged during the formation of the weld mark portion 242. The spacing A also cannot be too large. For example, if the spacing A > 10 mm, the weld mark portion 242 is too far away from the weak portion 241, the weak portion 241 cannot be annealed during the formation of the weld mark portion 242.

In some embodiments, 0.8 mm ≤ A ≤ 3 mm is further satisfied.

In a direction perpendicular to a thickness direction of the pressure relief portion 244 spacing between the weld mark portion 242 and the weak portion 241 is defined as A, which satisfies: 0.8 mm ≤ A ≤ 3 mm.

In the direction perpendicular to the thickness direction of the pressure relief portion 244, the value of the spacing between the weld mark portion 242 and the weak portion 241 may be: A = 0.8 mm, 0.9 mm, 1 mm, 1.2 mm, 1.5 mm, 1.7 mm, 2 mm, 2.2 mm, 2.5 mm, 2.8 mm, 3 mm, etc.

Referring to Table 1, it can be seen from the table that when 3 mm < A ≤ 10 mm, the annealing effect is not obvious, and the detonation pressure of the battery cell 20 decreases slightly after the weld mark portion 242 is formed. When 0.5 mm ≤ A < 0.8 mm, although the annealing effect is obvious, a high accuracy of the spacing is required, and slight changes in the spacing will cause a large change in the detonation pressure of the battery cell 20 after the weld mark portion 242 is formed. Therefore, it is difficult to control the detonation pressure of the battery cell 20 after the weld mark portion 242 is formed. In addition, since the distance to the weak portion 241 is relatively close when 0.5 mm ≤ A < 0.8 mm, the risk of damage to the weak portion 241 is greater.

In the direction perpendicular to the thickness direction of the pressure relief portion 244, the spacing between the weld mark portion 242 and the weak portion 241 is limited to the range of 0.8-3 mm, so that a good annealing effect on the weak portion 241 can be ensured while the weak portion 241 is less likely to be damaged.

Referring to Figs. 5 and 6, in some embodiments, the weld mark portion 242 is arranged around the weak portion 241.

The weld mark portion 242 extends in the peripheral direction of the weak portion 241 and is located outside the weak portion 241. For example, when the weak portion 241 is of a strip-shaped structure, the weld mark portion 242 may be of an annular structure, and the weld mark portion 242 surrounds the weak portion 241 so that the weak portion 241 is located inside the weld mark portion 242. For another example, when the weak portion 241 is of an annular structure, the weld mark portion 242 may also be of an annular structure, and the weld mark portion 242 surrounds the weak portion 241 so that the weak portion 241 is located inside the weld mark portion 242.

The weld mark portion 242 is arranged around the weak portion 241, and the weld mark portion 242 is located outside the weak portion 241. In this way, during the formation of the weld mark portion 242, the high temperature can act on the entire periphery of the weak portion 241, achieving a better annealing effect, so that when the internal pressure of the battery cell 20 reaches the detonation pressure, the weak portion 241 can quickly crack, achieving rapid pressure relief.

Referring to Figs. 7 and 8, Fig. 7 is a schematic top view of a pressure relief device 24 (with a weak portion 241 arranged around a weld mark portion 242) according to some embodiments of the present application; Fig. 8 is a sectional view taken through C-C of Fig. 7. In some embodiments, the weak portion 241 is arranged around weld mark portion 242.

The weld mark portion 242 extends in the peripheral direction of the weak portion 241 and is located inside the weak portion 241. For example, when the weak portion 241 is of an annular structure, the weld mark portion 242 may also be of an annular structure, and the weak portion 241 surrounds the weld mark portion 242 so that the weld mark portion 242 is located inside the weak portion 241.

It should be noted that the dotted line in Fig. 8 is to identify the range of the weak portion 241 and does not represent the actual structure.

The weak portion 241 is arranged around the weld mark portion 242, and the weld mark portion 242 is located inside the weak portion 241. In this way, during the formation of the weld mark portion 242, the high temperature can also act on the entire periphery of the weak portion 241, achieving a better annealing effect, so that when the internal pressure of the battery cell 20 reaches the detonation pressure, the weak portion 241 can quickly crack, achieving rapid pressure relief.

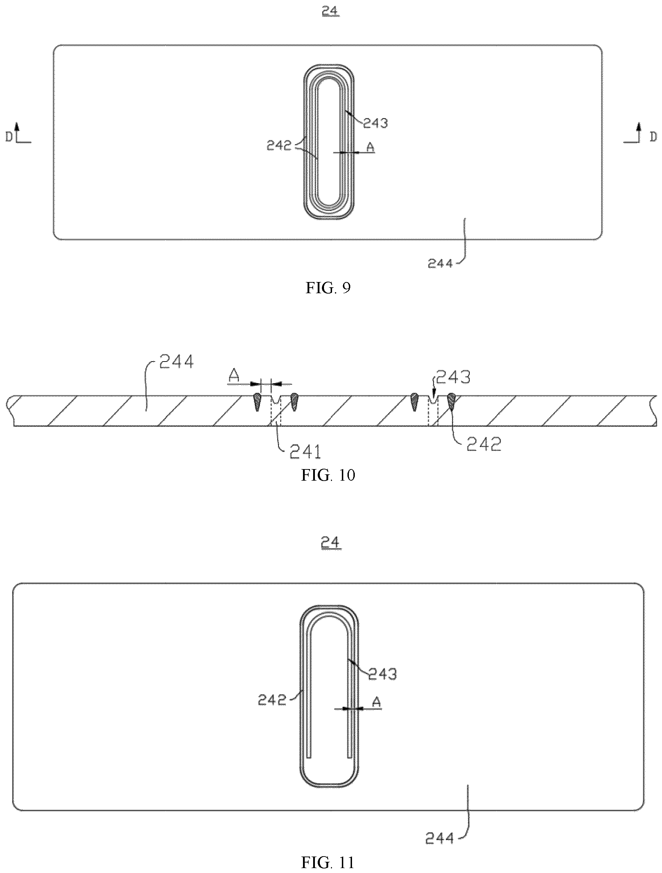

Referring to Figs. 9 and 10, Fig. 9 is a schematic top view of a pressure relief device 24 (with a weak portion 241 located between two weld mark portions 242) according to some embodiments of the present application. Fig. 10 is a cross-sectional view along D-D in Fig. 9. In some embodiments, the pressure relief device 24 includes two weld mark portions 242, and the weak portion 241 is located between the two weld mark portions 242 in a first direction. The first direction is perpendicular to the thickness direction of the pressure relief portion 244.

The first direction is a direction perpendicular to the thickness direction of the pressure relief portion 244.

The weak portion 241 is located between the two weld mark portions 242 in the first direction. In other words, the weak portion 241 is arranged between the two weld mark portions 242 in the first direction. For example, the weak portion 241 and the two weld mark portions 242 are each of an annular structure, one of the weld mark portions 242 is arranged inside the weak portion 241, and the other weld mark portion 242 is arranged outside the weak portion 241. For another example, if the weak portion 241 and the two weld mark portions 242 are each of a strip-shaped structure, the two weld mark portions 242 are located on two sides of the weak portion 241 in the first direction.

It should be noted that the dotted line in Fig. 10 is to identify the range of the weak portion 241 and does not represent the actual structure.

By arranging the weak portion 241 between the two weld mark portions 242 in the first direction, during the formation of the two weld mark portions 242, the high temperature can fully act on the weak portion 241, achieving a better annealing effect, so that when the internal pressure of the battery cell 20 reaches the detonation pressure, the weak portion 241 can quickly crack, achieving rapid pressure relief.

In some embodiments, the weak portion 241 is a closed structure extending along a closed trajectory.

The "closed trajectory" refers to a trajectory that has two ends connected together. The closed trajectory may be a circular trajectory, an elliptical trajectory, a polygonal trajectory, etc. Since the weak portion 241 extends along a closed trajectory, the weak portion 241 may also be circular, elliptical, polygonal, etc.

The weak portion 241 is configured as a closed structure extending along a closed trajectory, so that when the internal pressure of the battery cell 20 reaches the detonation pressure, the internal pressure can push open the weak portion 241 from all sides, allowing for faster and easier pressure relief.

Referring to Fig. 11, Fig. 11 is a schematic top view of a pressure relief device 24 (with a weak portion 241 being a non-closed structure extending along a non-closed trajectory with a distance between two ends) according to some embodiments of the present application. In some other embodiments, the weak portion 241 is a non-closed structure extending along a non-closed trajectory with a distance between two ends.

The non-closed trajectory with a distance between two ends may be a U-shaped trajectory, a C-shaped trajectory, an arc-shaped trajectory, a parabolic trajectory, etc. Since the weak portion 241 extends along a non-closed trajectory with a distance between two ends, the weak portion 241 may also be U-shaped, C-shaped, arc-shaped, parabolic, etc.

In some embodiments, the weld mark portion 242 is a closed structure extending along a closed trajectory.

Since the weld mark portion 242 extends along a closed trajectory, the weld mark portion 242 may also be in a circular, elliptical, polygonal, etc. shape.

By configuring the weld mark portion 242 as a closed structure extending along a closed trajectory, the weld mark portion 242 can surround the weak portion 241. In this way, during the formation of the weld mark portion 242, the high temperature can fully act on the weak portion 241, achieving a better annealing effect.

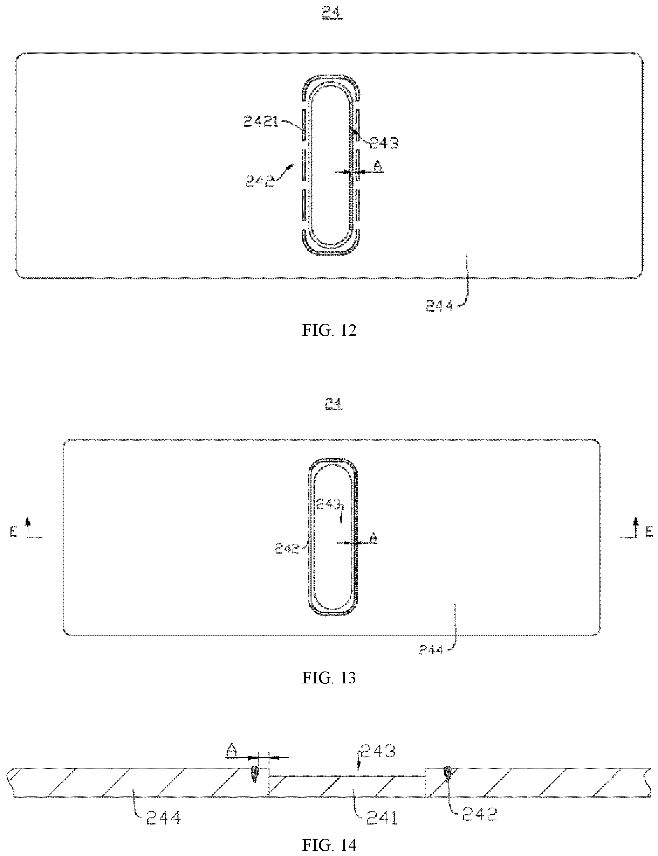

Referring to Fig. 12, Fig. 12 is a schematic top view of a pressure relief device 24 (with a plurality of weld mark sections 2421 arranged at intervals in a peripheral direction of a weak portion 241) according to some embodiments of the present application. In some embodiments, the weld mark portion 242 includes a plurality of weld mark sections 2421. The plurality of weld mark sections 2421 are arranged at intervals in the peripheral direction of the weak portion 241.

Each weld mark section 2421 is a part of the weld mark portion 242, and the plurality of weld mark sections 2421 form the weld mark portion 242. The weld mark sections 2421 are also formed after the pressure relief portion 244 is welded. The welding method is not limited and, for example, is gas welding, electric welding, laser welding, etc.

By providing a plurality of weld mark sections 2421 at intervals in the peripheral direction of the weak portion 241, energy consumption is lower and production costs can be saved compared to providing the weld mark portion 242 along the entire periphery of the weak portion 241 in the peripheral direction.

In some embodiments, the pressure relief portion 244 is provided with an indented groove 243, and the pressure relief device 24 forms the weak portion 241 at the position of the indented groove 243.

The indented groove 243 may be formed in a variety of ways, such as stamping, milling, etc. The indented groove 243 may be provided on a surface of the pressure relief portion 244 facing the inside of the housing 23, or may be provided on a surface of the pressure relief portion 244 facing away from the housing 23. Taking the pressure relief portion 244 of a rectangular flat plate structure as an example, the pressure relief portion 244 has opposite inner and outer surfaces in the thickness direction. The inner surface of the pressure relief portion 244 faces the inside of the housing 23, and the outer surface of the pressure relief portion 244 faces away from the housing 23. The indented groove 243 may be provided on the inner surface of the pressure relief portion 244 or on the outer surface of the pressure relief portion 244.

The indented groove 243 may be a groove recessed from the outer surface of the pressure relief portion 244 in the thickness direction of the pressure relief portion 244, and the weak portion 241 is a part of the pressure relief portion 244 between the inner surface thereof and a bottom surface of the indented groove 243. The indented groove 243 may alternatively be a groove recessed from the inner surface of the pressure relief portion 244 in the thickness direction of the pressure relief portion 244, and the weak portion 241 is a part of the pressure relief portion 244 between the outer surface thereof and the bottom surface of the indented groove 243.

For illustration, where the indented groove 243 may be a groove recessed from the outer surface of the pressure relief portion 244 in the thickness direction of the pressure relief portion 244, the indented groove 243 may be a linear groove extending along a bent trajectory. For example, referring to Fig. 11, the bent trajectory is a U-shaped trajectory, and the weak portion 241 is then a U-shaped part of the pressure relief portion 244 that is located between the inner surface thereof and the bottom surface of the indented groove 243.

For another example, referring to Figs. 13 and 14, Fig. 13 is a schematic top view of a pressure relief device 24 according to some other embodiments of the present application. Fig. 14 is a cross-sectional view along E-E in Fig. 13. The indented groove 243 is a strip-shaped groove extending in a width direction of the pressure relief portion 244. The weak portion 241 is a strip-shaped part of the pressure relief portion 244 between the inner surface thereof and a bottom surface of the indented groove 243. It should be noted that the dotted line in Fig. 14 is to identify the range of the weak portion 241 and does not represent the actual structure.

An indented groove 243 is provided on the pressure relief portion 244 to form the weak portion 241, which is simple and convenient, is easy to machine, and has low production costs.

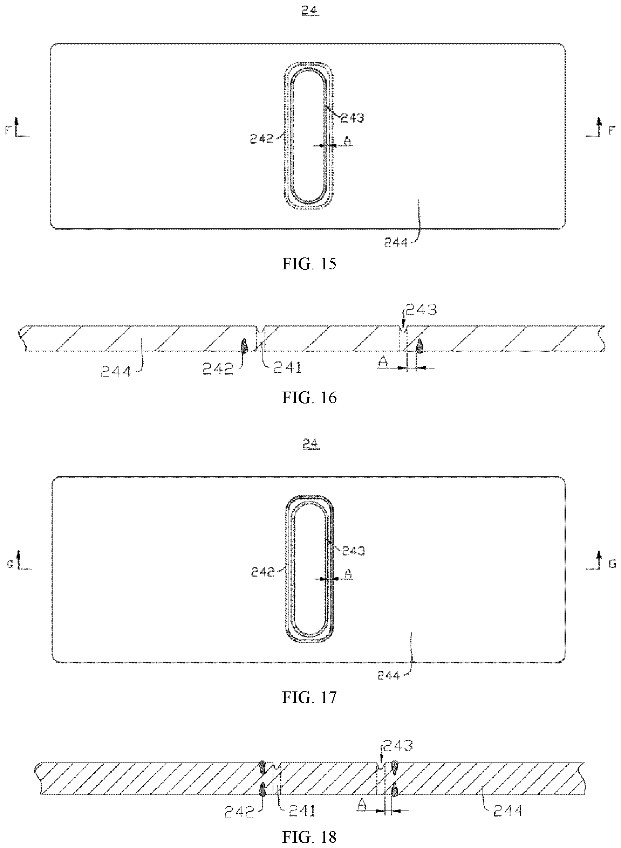

Referring to Figs. 15 and 16, Fig. 15 is a schematic top view of a pressure relief device 24 (with an indented groove 243 and a weld mark portion 242 located on two sides of a pressure relief portion 244) according to some embodiments of the present application. Fig. 16 is a cross-sectional view along F-F in Fig. 15. In some embodiments, the indented groove 243 and the weld mark portion 242 are located on two sides of the pressure relief portion 244 in the thickness direction of the pressure relief portion 244.

The indented groove 243 may be a groove recessed from the outer surface of the pressure relief portion 244 in the thickness direction of the pressure relief portion 244, in which case the weld mark portion 242 may be arranged on the inner surface of the pressure relief portion 244. The indented groove 243 may be a groove recessed from the inner surface of the pressure relief portion 244 in the thickness direction of the pressure relief portion 244, in which case the weld mark portion 242 may be arranged on the outer surface of the pressure relief portion 244. In this way, the indented groove 243 and the weld mark portion 242 are located on the two sides of the pressure relief portion 244 in the thickness direction.

It should be noted that the dotted line in Fig. 15 indicates the location of the weld mark portion 242. The dotted line in Fig. 16 is to identify the range of the weak portion 241 and does not represent the actual structure.

Even if the indented groove 243 and the weld mark portion 242 are located on the two sides of the pressure relief portion 244 in the thickness direction, during the formation of the weld mark portion 242, the high temperature can be transferred to the location of the weak portion 241, to anneal the weak portion 241.

In some embodiments, the indented groove 243 and the weld mark portion 242 are located on the same side of the pressure relief portion 244 in the thickness direction of the pressure relief portion 244.

The indented groove 243 may be a groove recessed from the outer surface of the pressure relief portion 244 in the thickness direction of the pressure relief portion 244, in which case the weld mark portion 242 may be arranged on the outer surface of the pressure relief portion 244. The indented groove 243 may be a groove recessed from the inner surface of the pressure relief portion 244 in the thickness direction of the pressure relief portion 244, in which case the weld mark portion 242 may be arranged on the inner surface of the pressure relief portion 244. In this way, the indented groove 243 and the weld mark portion 242 are located on the same side of the pressure relief portion 244 in the thickness direction.

The indented groove 243 and the weld mark portion 242 are located on the same side of the pressure relief portion 244 in the thickness direction, so that during the formation of the weld mark portion 242, the high temperature is easily transferred to the location of the weak portion 241, to anneal the weak portion 241.

Referring to Figs. 17 and 18, Fig. 17 is a schematic top view of a pressure relief device 24 (with two weld mark portions 242 located on two sides of a pressure relief portion 244) according to some embodiments of the present application. Fig. 18 is a cross-sectional view along G-G in Fig. 17. In some embodiments, the pressure relief device 24 includes two weld mark portions 242. The weld mark portions 242 are located on two sides of the pressure relief portion 244 in the thickness direction of the pressure relief portion 244.

The indented groove 243 may be provided on one of the inner surface of the pressure relief portion 244 and the outer surface of the pressure relief portion 244. The two weld mark portions 242 are respectively provided on the outer surface of the pressure relief portion 244 and the inner surface of the pressure relief portion 244.

It should be noted that the dotted line in Fig. 18 is to identify the range of the weak portion 241 and does not represent the actual structure.

During the formation of each of the two weld mark portions 242, the high temperature can be transferred to the location of the weak portion 241, to anneal the weak portion 241.

An embodiment of the present application also provides a battery cell 20. The battery cell 20 includes a pressure relief device 24 as described above.

An embodiment of the present application also provides a battery 100. The battery 100 includes a battery cell 20 as described above.

An embodiment of the present application also provides an electrical apparatus. The electrical apparatus includes a battery 100 as described above, the battery 100 being configured to supply electric energy.

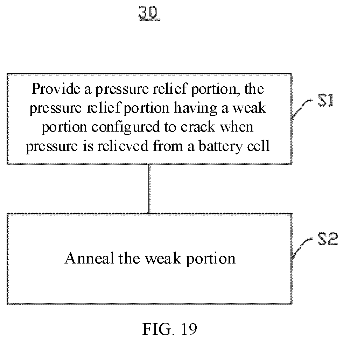

Referring to Fig. 19, Fig. 19 is a schematic block diagram of a method 30 for manufacturing a pressure relief device according to some embodiments of the present application. An embodiment of the present application also provides a method 30 for manufacturing a pressure relief device 24 for a battery cell 20. The method 30 for manufacturing a pressure relief device includes the following steps.

In step S1, a pressure relief portion 244 is provided. The pressure relief portion 244 has a weak portion 241, and the weak portion 241 is configured to crack when pressure is relieved from the battery cell 20.

In step S2, the weak portion 241 is annealed.

In some embodiments, in the step of annealing the weak portion 241,
the pressure relief portion 244 is laser welded to anneal the weak portion 241. Through the laser ablation of the pressure relief portion 244, the high temperature generated by the laser ablation will act on the weak portion 241 and have an annealing effect on the weak portion 241 (refining material grains of the weak portion 241, releasing the internal stress of the material of the weak portion 241, and softening the weak portion 241 at the same time). In this way, under the condition of consistent detonation pressure, the weak portion 241 of the pressure relief device 24 provided with the weld mark portion 242 can be thicker than a weak portion 241 of a pressure relief device 24 provided with no weld mark portion 242. The increased thickness of the weak portion 241 can improve the resistance to external impact to reduce the risk of opening a valve in advance. In addition, if the thickness of the weak portion 241 is larger, the thickness that needs to be thinned by machining is smaller, so that the difficulty of machining can be reduced.

In some embodiments, after the pressure relief portion 244 is laser welded, a weld mark portion 242 can be formed on the pressure relief portion 244, and in a direction perpendicular to a thickness direction of the pressure relief portion 244, a spacing between the weld mark portion 242 and the weak portion 241 is defined as A, satisfying: 0.5 mm ≤ A ≤ 10 mm.

The spacing between the weld mark portion 242 and the weak portion 241 in the direction perpendicular to the thickness direction of the pressure relief portion 244 is limited to 0.5-10 mm, so that during the laser welding, the weak portion 241 is less likely to be damaged while providing a good annealing effect on the weak portion 241. The spacing A cannot be too small. For example, if the spacing A < 0.5 mm, the weak portion 241 is likely to be damaged during the laser welding. The spacing A also cannot be too large. For example, if the spacing A > 10 mm, the weld mark portion 242 is too far away from the weak portion 241, the weak portion 241 cannot be annealed during the laser welding.

In some other embodiments, the weak portion 241 may also be baked to anneal the weak portion 241.

According to some embodiments of the present application, reference is made to Figs. 4-19.

An embodiment of the present application provides a pressure relief device 24 for a battery cell 20. The pressure relief device 24 includes a pressure relief portion 244, a weak portion 241 and a weld mark portion 242. The weak portion 241 is arranged at the pressure relief portion 244, and the weak portion 241 is configured to crack when pressure is relieved from the battery cell 20. The weld mark portion 242 is arranged at the pressure relief portion 244, and the weld mark portion 242 is configured to anneal the weak portion 241 when the weld mark portion is formed. The weld mark portion 242 is arranged on the pressure relief portion 244 of the pressure relief device 24. It is necessary to ablate the weld mark portion 242 at a high temperature during formation. The high temperature acts on the weak portion 241 and functions to anneal the weak portion 241 (refining material grains of the weak portion 241, releasing the internal stress of the material of the weak portion 241, and softening the weak portion 241 at the same time). In this way, under the condition of consistent detonation pressure, the weak portion 241 of the pressure relief device 24 provided with the weld mark portion 242 can be thicker than a weak portion 241 of a pressure relief device 24 provided with no weld mark portion 242. The increased thickness of the weak portion 241 can improve the resistance to external impact to reduce the risk of opening a valve in advance. In addition, if the thickness of the weak portion 241 is larger, the thickness that needs to be thinned by machining is smaller, so that the difficulty of machining can be reduced.

In a direction perpendicular to a thickness direction of the pressure relief portion 244 spacing between the weld mark portion 242 and the weak portion 241 is defined as A, which satisfies: 0.5 mm ≤ A ≤ 10 mm. The spacing between the weld mark portion 242 and the weak portion 241 in the direction perpendicular to the thickness direction of the pressure relief portion 244 is limited to 0.5-10 mm, so that during the formation of the weld mark portion 242, the weak portion 241 is less likely to be damaged while providing a good annealing effect on the weak portion 241. It should be noted that the spacing A cannot be too small. For example, if the spacing A < 0.5 mm, the weak portion 241 is likely to be damaged during the formation of the weld mark portion 242. The spacing A also cannot be too large. For example, if the spacing A > 10 mm, the weld mark portion 242 is too far away from the weak portion 241, the weak portion 241 cannot be annealed during the formation of the weld mark portion 242.

The weld mark portion 242 is arranged around the weak portion 241. The weld mark portion 242 is arranged around the weak portion 241, and the weld mark portion 242 is located outside the weak portion 241. In this way, during the formation of the weld mark portion 242, the high temperature can act on the entire periphery of the weak portion 241, achieving a better annealing effect, so that when the internal pressure of the battery cell 20 reaches the detonation pressure, the weak portion 241 can quickly crack, achieving rapid pressure relief.

An embodiment of the present application also provides a method 30 for manufacturing a pressure relief device 24 for a battery cell 20, the method 30 for manufacturing a pressure relief device including: providing a pressure relief portion 244, the pressure relief portion 244 having a weak portion 241, the weak portion 241 being configured to crack when pressure is relieved from the battery cell 20; and annealing the weak portion 241.

The foregoing descriptions are merely preferred embodiments of the present application and are not intended to limit the present application. For those skilled in the art, the present application may have various modifications and changes. Any modifications, equivalent substitutions, improvements, etc. made within the spirit and principles of the present application shall fall into the scope of protection of the present application.

## Claims

1. A pressure relief device for a battery cell, the pressure relief device comprising:
a pressure relief portion;
a weak portion arranged at the pressure relief portion and configured to crack when pressure is relieved from the battery cell; and
a weld mark portion arranged at the pressure relief portion and configured to anneal the weak portion when the weld mark portion is formed.

2. The pressure relief device according to claim 1, wherein in a direction perpendicular to a thickness direction of the pressure relief portion, a spacing between the weld mark portion and the weak portion is defined as A, satisfying: 0.5 mm ≤ A ≤ 10 mm.

3. The pressure relief device according to claim 2, wherein 0.8 mm ≤ A ≤ 3 mm is further satisfied.

4. The pressure relief device according to any one of claims 1-3, wherein the weld mark portion is arranged around the weak portion.

5. The pressure relief device according to any one of claims 1-3, wherein the weak portion is arranged around the weld mark portion.

6. The pressure relief device according to any one of claims 1-3, comprising two weld mark portions, wherein the weak portion is located between the two weld mark portions in a first direction which is perpendicular to the thickness direction of the pressure relief portion.

7. The pressure relief device according to any one of claims 1-6, wherein the weak portion is a closed structure extending along a closed trajectory.

8. The pressure relief device according to any one of claims 1-7, wherein the weld mark portion is a closed structure extending along a closed trajectory.

9. The pressure relief device according to any one of claims 1-8, wherein the weld mark portion comprises a plurality of weld mark sections which are arranged at intervals in a peripheral direction of the weak portion.

10. The pressure relief device according to any one of claims 1-9, wherein the pressure relief portion is provided with an indented groove, and the pressure relief device forms the weak portion at the position of the indented groove.

11. The pressure relief device according to claim 10, wherein the indented groove and the weld mark portion are located on two sides of the pressure relief portion in the thickness direction of the pressure relief portion.

12. The pressure relief device according to claim 10, wherein the indented groove and the weld mark portion are located on the same side of the pressure relief portion in the thickness direction of the pressure relief portion.

13. The pressure relief device according to claim 10, comprising two weld mark portions, wherein the two weld mark portions are located on two sides of the pressure relief portion in the thickness direction of the pressure relief portion.

14. A battery cell, comprising a pressure relief device according to any one of claims 1-13.

15. A battery, comprising a battery cell according to claim 14.

16. An electrical apparatus, comprising a battery according to claim 15, the battery being configured to supply electric energy.

17. A method for manufacturing a pressure relief device for a battery cell, the method for manufacturing a pressure relief device comprising:
providing a pressure relief portion, the pressure relief portion having a weak portion configured to crack when pressure is relieved from the battery cell; and
annealing the weak portion.

18. The method for manufacturing a pressure relief device according to claim 17, wherein in the step of annealing the weak portion,
the pressure relief portion is laser welded to anneal the weak portion.

19. The method for manufacturing a pressure relief device according to claim 18, wherein after the pressure relief portion is laser welded, a weld mark portion is capable of being formed on the pressure relief portion, and in a direction perpendicular to a thickness direction of the pressure relief portion, a spacing between the weld mark portion and the weak portion is defined as A, satisfying: 0.5 mm ≤ A ≤ 10 mm.
